**Europäisches Patentamt**

**European Patent Office**

**Office européen des brevets**

(11) Publication number : **0 435 736 B1**

# EUROPEAN PATENT SPECIFICATION

(45) Date of publication of patent specification :
01.06.94 Bulletin 94/22

(51) Int. Cl.⁵ : **H01M 8/06, C10G 45/00**

(21) Application number : **90403643.1**

(22) Date of filing : **18.12.90**

(54) **Method for producing raw materials for a reformer by cracking and desulfurizing petroleum fuels.**

(30) Priority : **27.12.89 JP 336485/89**

(43) Date of publication of application :
**03.07.91 Bulletin 91/27**

(45) Publication of the grant of the patent :
**01.06.94 Bulletin 94/22**

(84) Designated Contracting States :
**DE FR GB**

(56) References cited :
**US-A- 4 151 119
US-A- 4 336 130
US-A- 4 816 353
CHEMICAL ABSTRACTS, vol. 105, no. 26, December 29, 1986, Columbus, Ohio, USA SATO, KAZUO et al. "Desul- furization apparatus" page 190, abstract-No. 229 974e**

(73) Proprietor : **PETROLEUM ENERGY CENTER
2-3-22, Azabudai
Minato-ku, Tokyo (JP)**

Proprietor : **Showa Shell Sekiyu Kabushiki Kaisha
2-5, Kasumigaseki 3-chome
Chiyoda-ku
Tokyo (JP)**

(72) Inventor : **Yamase, Osamu, c/o Showa Shell Sekiyu K.K.
2-5, Kasumigaseki 3-chome,
Chiyoda-ku
Tokyo 100 (JP)**
Inventor : **Miura, Tadayuki,c/o Showa Shell Sekiyu K.K.
2-5, Kasumigaseki 3-chome,
Chiyoda-ku
Tokyo 100 (JP)**
Inventor : **Kubota, Hajime,c/o Showa Shell Sekiyu K.K.
2-5, Kasumigaseki 3-chome,
Chiyoda-ku
Tokyo 100 (JP)**

(74) Representative : **Bourgognon, Jean-Marie et al
Cabinet Flechner
22, Avenue de Friedland
F-75008 Paris (FR)**

## Description

The present invention relates to an improvement in desulfurization step in fuel cell electricity generation process which uses petroleum products as raw material fuels and aims at diversification of source fuels.

Fuel cell electricity generation process is one of future type energy conversion techniques which have many features such as saving of energy and less environmental pollution. Fuels for fuel cell are produced mainly from natural gas and methanol, but can also be produced from liquid fuels such as petroleum. However, according to steam reforming method, up to butane fraction can be practically obtained in large-scale plant, but this is still insufficient from a standpoint of fuel cell electricity generation process which uses petroleums.

US-A-4,816,353 teaches an apparatus or a steam reformer for producing a hydrocarbon-containing gas from a hydrocarbon feedstock and steam, said apparatus being used in an integrated fuel cell (col.1, lines 14-16; col.3, lines 48-50).

US-A-4,151,119 mentions a catalytic cracking process of hydrocarbons containing a large amount of metals such as gas oil, heavy petroleum crude oil and residual oil, in the presence of a catalyst containing (a) crystalline aluminosilicate zeolite, (b) inorganic oxide gel such as silica, zirconia or alumina and (c) absorbents (col.1, lines 17-20 and 25-29).

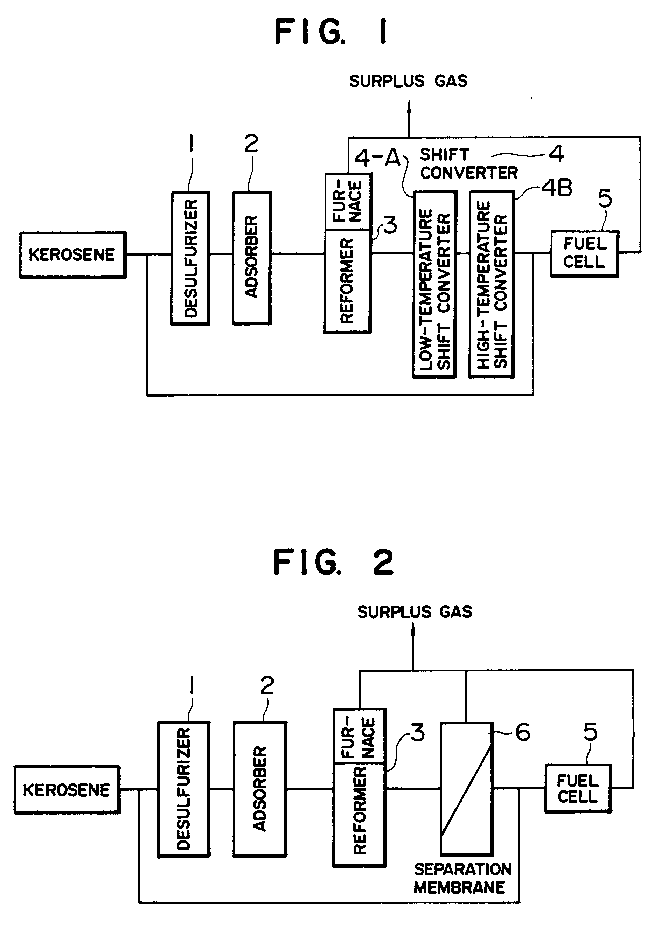

A representative flow sheet of electricity generation process by fuel cells using petroleums is shown in Figs.1 and 2.

In combination of desulfurizer and reformer in the above process, load of catalyst for the reformer increases with the raw materials becoming heavier. Therefore, load for reforming catalyst is reduced by allowing catalyst in desulfurizer to have cracking function, and thus, raw material fuels can be diversified.

The present invention provides a method as defined in claim 1.

Sub-claims 2-11 recites other features of the invention.

Fig.1 is a flow sheet of a fuel cell process.

Fig.2 is another flow sheet of a fuel cell process.

Fig.3 is a flow sheet of preparation of metallosilicate catalyst of the present invention.

Fig.4 is a graph which shows relation between reaction temperature of the present invention and cracking rate.

In Figs.1 and 2 which are flow sheets of fuel cell electricity generation processes to which the present invention is applied, the reference numbers indicate the following:

1: desulfurizer, 2: adsorber, 3: reformer provided with a furnace, 4: shift converter (4-A: low-temperature shift converter, 4-B: high-temperature shift converter, 5: fuel cell, 6: seperation membrane.

Kerosene, naphtha, LPG, and the like are used as raw material fuels for fuel cells.

In the desulfurizer, Y-type zeolite or metallosilicate catalyst (Si/Me atomic ratio: 40-3200, where Me is Al, Ni, Co, Mo, W, Fe, Cr or Ga) is used as desulfurizing catalyst having cracking function.

Reaction conditions in desulfurizer are selected so that sulfur content in product is at most 1 ppm taking into consideration the poisoning of reforming catalyst and cracking rate of the raw material fuel is 10-70%.

Cracking rate here means a proportion of components in the product lighter than raw material. In the adsorber, sulfur contained in the raw material fuel is removed in the form of hydrogren sulfide.

In the reformer, the raw material are converted to a product-gas comprising hydrogen as main component and CO and $CO_2$ in accordance with the following reaction formula.

$$C_3H_8 + 4H_2O = 2CO + CO_2 + 8H_2$$

Catalysts used are commercially available noble metal or nickel-supporting alumina catalysts.

Composition-range of raw material which can be applied to reformer is specific gravity: 0.5-0.85, components: $C_3$-$C_{20}$ hydrocarbons.

Conditions in the reformer are temperature: 700-800°C; pressure: 10 kg/cm$^2$ or less; $H_2O/C$ (molar ratio): at least 2; and SV: 0.5-4.0 hr$^{-1}$.

Compositions of the product-gas in the reformer is typically $H_2$ 65-80 vol%, CO 5-20 vol%, and $CO_2$ 5-25 vol%, but this is may vary depending on operation-conditions.

The upper and lower limit of the above ranges are determined by changing operation-conditions of reformer, but operation-conditions by which content of $H_2$ is close to the upper limit are preferred.

One example of composition of product-gas from the reformer when kerosene, naphtha and LPG are used as raw material is shown in Table 1.

Table 1

| Gas | Raw material kerosene (vol%) | Raw material naphtha (vol%) | Raw material LPG (vol%) |
|---|---|---|---|
| H | 72.0 | 73.9 | 74.2 |
| CO | 10.8 | 10.0 | 9.7 |
| $CO_2$ | 17.2 | 16.1 | 16.1 |

In shift converter, reaction is carried out in the presence of $H_2O$ according to the following reaction formula.
$$CO + H_2O = CO_2 + H_2$$
In the shift converter, Fe-based catalysts and Cubased catalysts are used and there are the two reactions of high-temperature shift reaction and low-temperature shift reaction depending on catalyst used.

The high-temperature shift reaction is carried out at a temperature of 330°C or higher and a pressure of 1-35 kg/cm² and the low-temperature shift reaction is carried out at a temperature of 190-370°C and at a pressure of 1-30 kg/cm².

Generally, both high-temperature shift converter and low-temperature shift converter are necessary for reducing the CO concentration in converted gas to 1 vol% or less.

In the fuel cell electricity generation process as shown in Fig.2, a polyimide type gas separation membrane is used in place of shift converter. In this case, reformed gas is treated under the conditions of temperature 50-150°C and pressure 2-10 kg/cm², and CO in the reformed gas is mostly separated and removed.

Example

The following five metallosilicate catalysts were used as cracking and desulfurizing catalysts.
Catalyst A:     Al-silicate (Si/Al = 40)
Catalyst B:     Ni-silicate (Si/Ni = 40)
Catalyst C:     Co ion exchanged type Al-silicate (Si/Al = 40)
Catalyst D:     Al-silicate (Si/Al = 3200)
Catalyst E:     Fe-silicate (Si/Fe = 3200)
Properties of the above catalysts are shown in Table 2.

Table 2

| Catalyst | A | B | C | D | E |
|---|---|---|---|---|---|
| Surface area $(m^2/g)$ | 382.9 | 352.8 | 315.6 | 309.9 | 372.3 |
| Pore volume (ml/g) | 0.29 | 0.20 | 0.28 | 0.18 | 0.26 |

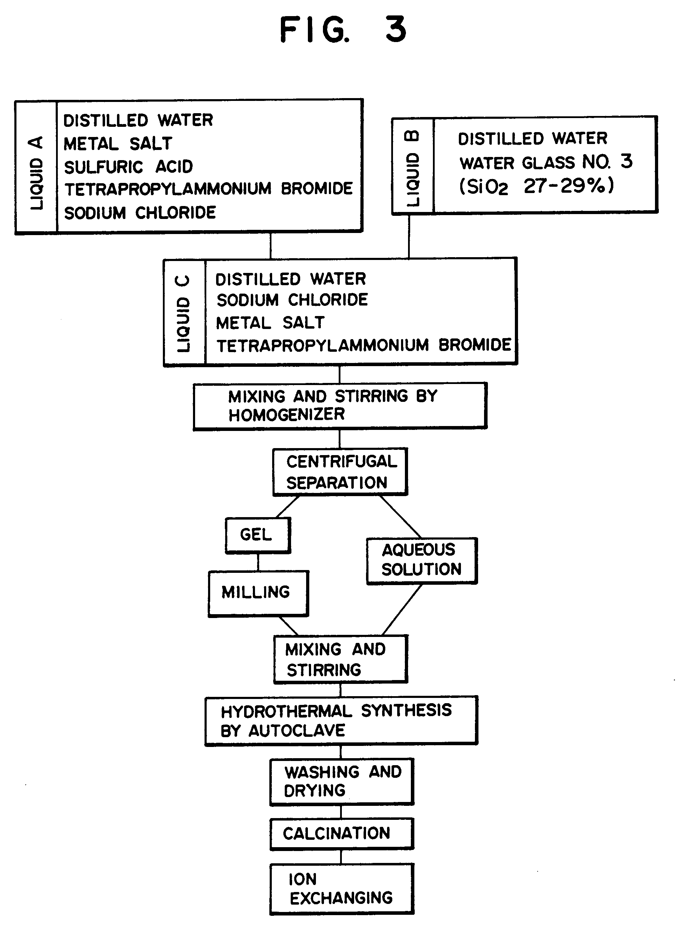

Preparation method of metallosilicate catalyst is shown in Fig.3. Hydrothermal synthesis of metallosilicate catalyst was carried out in an autoclave using water-soluble salts of active metals such as sulfate, nitrate and chloride at 100-250°C, drying was carried out at 120°C for 4 hours, and calcination was carried out at 540°C for 3.5 hours. Then, sodium ion of the metallosilicate was ion exchanged with ammonium ion and the metallosilicate was dried and calcined at 540°C and then was used.

Desufurization reaction was carried out using a pressure flowing type reactor with a reaction tube made of SUS316 and having an inner diameter of 16 mm and a length of 660 mm.

120 ml of the catalyst (8-16 meshes) was packed and 70 ml thereof, i.e., from the center of the upper electric furnace to the center of the lower electric furnace was made as effective catalyst packing amount.

Kerosene and naphtha were used as raw materials for desulfurization. For kerosene, reaction was carried out under the conditions of pressure 6 kg/cm², SV 1 hr⁻¹ and $H_2$/oil ratio 1000 at temperatures of 400°C and 500°C.

The results for liquid product are shown in Table 3 on kerosene and in Table 5 on naphtha. Furthermore, results on the whole products including gas component for kerosene are shown in Table 4.

Analysis of cracking products (liquid component) of keresene and naphtha was carried out using SHIMADZU GC-9A (column CBP.1-M50) and analysis of cracking products (gas component) was carried out using SHIMADZU GC-9A (column: sebaconitrile).

Table 3

|  | Reaction | Composition of product | | |
|---|---|---|---|---|
|  | temperature ($^\circ$C) | $C_9$ and lower (wt%) | $C_{10-12}$ (wt%) | $C_{13}$ and higher (wt%) |
| Raw material kerosene | - | 5.9 | 55.1 | 39.0 |
| Catalyst A | 400 | 35.4 | 35.5 | 29.1 |
| Catalyst A | 500 | 56.6 | 28.8 | 14.6 |
| Catalyst B | 400 | 22.6 | 42.2 | 35.2 |

Table 4

|  | Reaction | Composition of product | | |
|---|---|---|---|---|
|  | temperature ($^\circ$C) | $C_5$ and lower (wt%) | $C_{6-9}$ (wt%) | $C_{10}$ and higher (wt%) |
| Raw material kerosene | - | 0 | 5.9 | 94.1 |
| Catalyst A | 400 | 29.4 | 27.9 | 42.7 |
| Catalyst A | 500 | 36.9 | 25.8 | 37.3 |

4

Table 5

| Catalyst | Reaction conditions | | | Reaction products (wt%) | | | |
|---|---|---|---|---|---|---|---|
| | Temp. ($^{\circ}$C) | SV ($hr^{-1}$) | Pressure ($kg/cm^2$) | $C_6$ and lower | $C_7$-$C_9$ | $C_{10}$ and higher | Aromatics (BTX) |
| Raw material naphtha | | | | 0.4 | 74.3 | 10.5 | 14.8 |
| A | 400 | 0.8 | 6 | 61.4 | 13.2 | 5.9 | 19.5 |
| A | 500 | 0.8 | 6 | 58.3 | 8.5 | 6.1 | 27.1 |
| A | 500 | 1.3 | 25 | 48.1 | 6.7 | 6.4 | 38.8 |
| A | 400 | 1.9 | 6 | 55.2 | 12.3 | 9.5 | 23.0 |
| D | 500 | 2.0 | 6 | 53.7 | 24.0 | 5.7 | 16.6 |
| D | 500 | 0.9 | 6 | 56.1 | 21.9 | 6.8 | 15.2 |
| E | 500 | 1.9 | 6 | 54.4 | 22.3 | 6.2 | 17.1 |
| E | 500 | 0.9 | 6 | 46.7 | 24.1 | 9.2 | 20.0 |

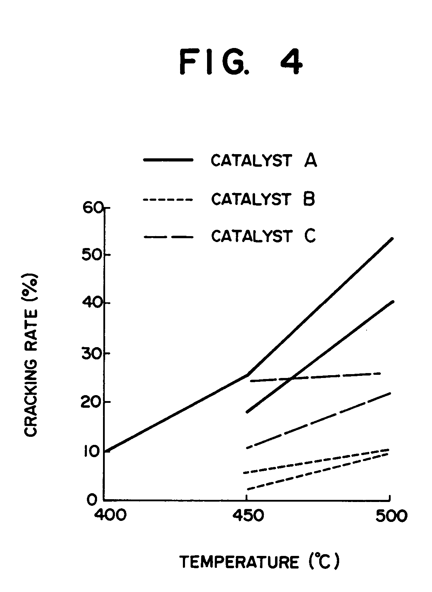

Furthermore, for kerosene, relation between reaction temperature and cracking rate was examined at temperatures of 400°C, 450°C and 500°C, a pressure of 6 kg/cm$^2$, an SV of 1 hr$^{-1}$ and an H$_2$/oil ratio of 1000 and the results are shown in Fig.4.

As can be seen from Tables 3-5 and Fig.4, cracking rate reached 50% or higher in the case of catalysts A-E. With increase of reaction temperature and pressure, aromatic components increased. Aromatic components are apt to reduce activity of catalyst due to deposition of carbon on catalyst. So, production of aromatic components must be lowered.

Y-type zeolite, Mo-silicate, W-silicate, Cr-silicate and Ga-silicate catalysts also showed the cracking activity for kerosene similar to that of catalyst B.

As explained above, according to the present invention, cracking and desulfurizing catalysts having a cracking rate of 50% or higher for kerosene and naphtha have been able to be developed.

When kerosene (sulfur content 25 ppm) was used as raw material oil and cracking was conducted using catalyst A at a reaction temperature of 500°C, fractions of C$_9$ and lower in the product reached 60% or higher with sulfur content of less than 0.1 ppm, and fractions of C$_{12}$ and lower reached 85%. Amount of aromatics produced was small.

**Claims**

1. A fuel cell electricity generation process with i) a desulfurizer, ii) a sulfur adsorber, iii) a steam reformer, iv) a CO-shift converter or CO gas separation membrane and v) a fuel cell, in which raw materials for the steam reformer are produced by cracking and desulfurizing petroleum fuels in the desulfurizer at a temperature of 300-600°C, a pressure of 1-10 Kg/cm$^2$, an H$_2$/oil ratio of 500-2000 and a SV of 0.5-4 hr$^{-1}$, using a zeolite catalyst or a metallosilicate catalyst as desulfurizing catalyst.

2. A method according to claim 1, wherein the zeolite catalyst is Y-type zeolite.

3. A method according to claim 1 or 2, wherein the metallosilicate catalyst has an atomic ratio Si/Me of 40-3200 wherein Me is a metal selected from the group consisting of Al, Ni, Co, Mo, W, Fe, Cr and Ga.

4. A method according to anyone of claims 1 to 3, wherein the petroleum fuel is kerosene, naphtha or LPG.

5. A method according to anyone of claims 1 to 4, wherein the raw material which is fed to the reformer has a specific gravity of 0.5-0.85 and comprises $C_3$-$C_{20}$ hydrocarbons.

6. A method according to anyone of claims 1 to 5, wherein conditions in the reformer are a temperature of 700-800°C, a pressure of at most 10 kg/cm$^2$, a molar ratio $H_2O/C$ of at least 2, and an SV of 0.5-4.0 hr$^{-1}$.

7. A method according to anyone of claims 1 to 6, wherein gas produced in the reformer comprises 65-80 vol% of $H_2$, 5-20 vol% of CO, and 5-25 vol% of $CO_2$.

8. A method according to anyone of claims 1 to 7, wherein in the converter a high-temperature shift reaction or a low-temperature shift reaction is carried out.

9. A method according to anyone of claims 1 to 8, wherein in the converter a high-temperature shift reaction and low-temperature shift reaction are carried out.

10. A method according to anyone of claims 1 to 9, wherein the gas separation membrane comprises polyimide.

11. A method according to anyone of claims 1 to 10, wherein when the gas separation membrane is used, the reformed gas is treated at 50-150°C and under a pressure of 2-10 kg/cm$^2$.

**Patentansprüche**

1. Brennstoffzellen-Elektrizitätsgewinnungsverfahren mit
   i) einem Entschwefeler,
   ii) einem Schwefeladsorber,
   iii) einem Dampfreformer,
   iv) einem CO-Shiftkonverter oder einer CO-Gasseparationsmembran und
   v) einer Brennstoffzelle,
   wobei Ausgangsstoffe für den Dampfreformer durch Cracken und Entschwefeln von Petroleumbrenn- und -treibstoffen im Entschwefeler bei einer Temperatur von 300 bis 600°C, einem Druck von 1 bis 10 kg/cm$^2$, einem $H_2/Öl$-Verhältnis von 500 bis 2000 und einem SV-Wert von 0,5 bis 4 h$^{-1}$ hergestellt werden unter Verwendung eines Zeolithkatalysators oder eines Metallosilikatkatalysators als Entschwefelungskatalysator.

2. Verfahren nach Anspruch 1, wobei der Zeolithkatalysator ein Y-Typ-Zeolith ist.

3. Verfahren nach Anspruch 1 oder 2, wobei der Metallosilikatkatalysator ein Atomverhältnis Si/Me von 40 bis 3200 aufweist, wobei Me ein Metall ist, ausgewählt aus der Gruppe bestehend aus Al, Ni, Co, Mo, W, Fe, Cr und Ga.

4. Verfahren nach einem der Ansprüche 1 bis 3, wobei der Petroleumbrenn- und -treibstoff Kerosin, Naphtha oder LPG ist.

5. Verfahren nach einem der Ansprüche 1 bis 4, wobei der Ausgangsstoff, der dem Reformer zugeführt wird, ein spezifisches Gewicht von 0,5 bis 0,85 aufweist und $C_3$ bis $C_{20}$-Kohlenwasserstoffe umfaßt.

6. Verfahren nach einem der Ansprüche 1 bis 5, wobei im Reformer die Temperatur 700 bis 800°C, der Druck bis zu 10 kg/cm$^2$, das Mol-Verhältnis $H_2O/C$ mindestens 2 und der SV-Wert 0,5 bis 4,0 h$^{-1}$ beträgt.

7. Verfahren nach einem der Ansprüche 1 bis 6, wobei das im Reformer hergestellte Gas 65 bis 80 Vol.-% $H_2$, 5 bis 20 Vol.-% CO und 5 bis 25 Vol.-% $CO_2$ umfaßt.

8. Verfahren nach einem der Ansprüche 1 bis 7, wobei im Konverter eine Hochtemperaturshiftumsetzung oder eine Niedrigtemperaturshiftumsetzung ausgeführt wird.

9. Verfahren nach einem der Ansprüche 1 bis 8, wobei im Konverter eine Hochtemperaturshiftumsetzung und Niedrigtemperaturshiftumsetzung ausgeführt wird.

10. Verfahren nach einem der Ansprüche 1 bis 9, wobei die Gasseparationsmembran ein Polyimid umfaßt.

11. Verfahren nach einem der Ansprüche 1 bis 10, wobei die Gasseparationsmembran verwendet wird und das Spaltgas bei 50 bis 150°C unter einem Druck von 2 bis 10 kg/cm$^2$ behandelt wird.

**Revendications**

1. Procédé pour engendrer de l'électricité par pile à combustible avec i) une unité de désulfuration, ii) un adsorbeur de soufre, iii) un reformeur à la vapeur, iv) un convertisseur de CO à la vapeur d'eau ou une membrane de séparation de CO gazeux et v) une pile à combustible, dans lequel les matières premières pour le reformeur à la vapeur sont préparées en craquant et en désulfurant des combustibles à base de pétrole dans l'unité de désulfuration à une température de 300 à 600°C, sous une pression de 1 à 10 kg/cm$^2$, avec un rapport H$_2$/produits pétroliers de 500 à 2000 et avec une VS de 0,5 à 4 h$^{-1}$, en utilisant un catalyseur à base de zéolite ou un catalyseur à base de métallosilicate comme catalyseur de désulfuration.

2. Procédé suivant la revendication 1, dans lequel le catalyseur à base de zéolite est un zéolite de type Y.

3. Procédé suivant la revendication 1 ou 2, dans lequel le catalyseur à base de métallosilicate a un rapport atomique Si/Me de 40 à 3200, Me étant un métal choisi parmi Al, Ni, Co, Mo, W, Fe, Cr et Ga.

4. Procédé suivant l'une quelconque des revendications 1 à 3, dans lequel le combustible pétrolier est du kérosène, de l'essence lourde ou du gaz de pétrole liquéfié.

5. Procédé suivant l'une quelconque des revendications 1 à 4, dans lequel la matière première qui est chargée dans le reformeur a une densité de 0,5 à 0,85 et comprend des hydrocarbures en C$_3$ à C$_{20}$.

6. Procédé suivant l'une quelconque des revendications 1 à 5, dans lequel les conditions qui règnent dans le reformeur sont une température de 700 à 800°C, une pression de 10 kg/cm$^2$ au plus, un rapport molaire H$_2$O/C d'au moins 2 et une VS de 0,5 à 4,0 h$^{-1}$.

7. Procédé suivant l'une quelconque des revendications 1 à 6, dans lequel le gaz produit dans le reformeur comprend de 65 à 80 % en volume de H$_2$, de 5 à 20 % en volume de CO et de 5 à 25 % en volume de CO$_2$.

8. Procédé suivant l'une quelconque des revendications 1 à 7, dans lequel on effectue dans le convertisseur une réaction de conversion à haute température ou une réaction de conversion à basse température.

9. Procédé suivant l'une quelconque des revendications 1 à 8, dans lequel on effectue dans le convertisseur une réaction de conversion à haute température et une réaction de conversion à basse température.

10. Procédé suivant l'une quelconque des revendications 1 à 9, dans lequel la membrane de séparation du gaz comprend du polyimide.

11. Procédé suivant l'une quelconque des revendications 1 à 10, dans lequel, quand on utilise la membrane de séparation du gaz, on traite le gaz reformé entre 50 et 150°C et sous une pression de 2 à 10 kg/cm$^2$.

# FIG. 1

SURPLUS GAS

KEROSENE → DESULFURIZER (1) → ADSORBER (2) → FUR-NACE / REFORMER (3) → SHIFT CONVERTER (4) [LOW-TEMPERATURE SHIFT CONVERTER (4-A), HIGH-TEMPERATURE SHIFT CONVERTER (4B)] → FUEL CELL (5)

# FIG. 2

SURPLUS GAS

KEROSENE → DESULFURIZER (1) → ADSORBER (2) → FUR-NACE / REFORMER (3) → SEPARATION MEMBRANE (6) → FUEL CELL (5)

# FIG. 3

# FIG. 4